# EUROPEAN PATENT SPECIFICATION

(11) **EP 0 485 420 B1**
(45) Date of publication and mention of the grant of the patent: **04.05.1994**
(21) Application number: 90911308.6
(22) Date of filing: 31.07.1990
(51) Int. Cl.: C09D 201/06, C09D 133/06, C09D 135/00, C09D 167/00

(54) **COATING COMPOSITIONS**
ZUSAMMENSETZUNGEN FÜR BESCHICHTUNGEN
COMPOSITIONS DE REVETEMENT

(30) Priority: 01.08.1989 GB 8917562
(43) Date of publication of application: 20.05.1992
(73) Proprietor: TAUBMANS INDUSTRIES LIMITED, Villawood, NSW 2163 (AU); COURTAULDS COATINGS (HOLDINGS) LIMITED, London W1A 2BB (GB)
(72) Inventor: McKAY, Garry Michael, Strathmore, VIC 3041 (AU); FINNIE, Alistair Andrew, Tyne and Wear NE30 4RA (GB); MARRION, Alastair Robert, Nr. Morpeth Northumberland NE61 3EQ (GB); SAVILLE, Brian, Warwickshire CV34 5HP (GB)
(74) Representative: Hale, Stephen Geoffrey
(86) International application number: GB9001188
(87) International publication number: WO9102037

(56) References cited:
- EP-A- 0 048 128
- GB-A- 1 275 507
- Chemical Abstracts, vol., 88, no., 22, 29 May 1978, abstract no.154459k; & JP-A-52 127 927

## Description

This invention relates to a curable coating composition based on a hydroxy component and an anhydride component.

US Patent 4452948 describes a coating composition suitable for use as a glossy pigmented coating for a rigid substrate, particularly where hardening of the coating at ambient temperatures is required, for example as a vehicle re-finishing paint. The coating composition comprises a hydroxy component having at least two free hydroxy groups per molecule and an anhydride component having at least two cyclic carboxylic acid anhydride groups per molecule, at least one of these components being a film-forming polymer. The composition also includes a catalytically effective amount of amine groups for accelerating the curing reaction between the hydroxy groups and the anhydride groups.

European Patent Application 259172 describes a coating composition comprising an anhydride polymer containing at least two cyclic carboxylic acid anhydride groups and a polymer containing at least two functional groups reactive with anhydride groups. These reactive groups are selected from hydroxyalkylamino, hydroxyalkoxyalkylamino, hydroxy-substituted acyloxyalkylamino, hydroxy-substituted polyacyloxyalkylamino, mercaptoalkylamino and oxazolidino groups. One of the polymers comprises a flexible polymer chain selected from polyether, polyester, silicone, diene polymer, hydrogenated diene polymer, polyurethane, polyisobutylene and polyacrylate chains. The functional groups characteristic of that polymer are each present as a terminal group at the end of a flexible polymer chain. The cured coatings have increased resistance to impact and abrasion.

US Patent 4798745 describes a coating composition comprising a hydroxy component having at least two free hydroxy groups per molecule and an anhydride component having at least two carboxylic anhydride groups per molecule, used in amounts to provide a ratio of equivalents of hydroxyl groups to anhydride groups of 3:1 to 1:3. The anhydride component is a copolymer of at least 11% by weight of an ethylenically unsaturated anhydride with a vinyl comonomer such as styrene which is used in a molar proportion of at least 1:1 with respect to the unsaturated anhydride. Such an anhydride copolymer gives a non-yellowing coating composition when used with dimethylcocoamine catalyst.

Such compositions are generally stored as two-pack compositions which are mixed to form a liquid coating composition before use. Some reaction of the components takes place in the vessel used for mixing, causing a gradual increase in viscosity of the coating composition. The coating composition eventually becomes too viscous for spray application. The time for which the coating composition remains sufficiently mobile to be sprayed after mixing of the components is known as the "pot life". There is a need for such coating compositions to have an increased pot life without a correspondingly slower cure rate when applied as a film.

### Summary of the invention

A film-forming coating composition according to the invention comprises (A) a hydroxy component having at least two free hydroxy groups per molecule, (B) an anhydride component having at least two carboxylic acid anhydride groups per molecule and (C) amine groups which are catalytically effective for accelerating the curing reaction between the hydroxy groups of (A) and the anhydride groups of (B), and is characterised in that the composition also contains an amine salt or an acid capable of forming an amine salt with the said catalytically effective amine groups.

The amine salt or acid increases the pot life of the coating composition.

### Detailed disclosure

The hydroxy component (A) is preferably a film-forming polymer, although a hydroxy component which is not polymeric can be used. It is necessary that at least the combination of the hydroxy component with the anhydride component results in a film-forming system. The hydroxy component is preferably a hydroxy-functional acrylic polymer or a hydroxy-functional polyester.

Suitable hydroxy-functional acrylic polymers include copolymers containing 5 to 80% by weight, preferably 10 to 50% by weight, of a hydroxy-containing ester of an olefinically unsaturated carboxylic acid, the balance of the copolymer being units of at least one olefinically unsaturated comonomer. The hydroxy-containing ester is preferably an acrylate or methacrylate, particularly a hydroxyalkyl acrylate or methacrylate such as hydroxyethyl acrylate, hydroxyethyl methacrylate, hydroxypropyl methacrylate or hydroxypropyl acrylate. The hydroxy-containing ester can contain further ester or ether linkages, for example 2-(beta-hydroxy-ethoxy)ethyl acrylate or methacrylate or an adduct of hydroxyethyl acrylate or methacrylate with caprolactone. Examples of olefinically unsaturated comonomers which can be copolymerised with the hydroxy-containing ester are acrylic esters such as butyl acrylate or methacrylate, methyl methacrylate or acrylate, ethyl acrylate or methacrylate, propyl acrylate or methacrylate, n-hexyl acrylate or methacrylate, isopropyl acrylate or methacrylate, t-butyl acrylate or methacrylate, 2-ethylhexyl methacrylate or acrylate, cyclohexyl acrylate or methacrylate, 3,3,5-trimethylcyclohexyl acrylate or methacrylate or isobornyl acrylate or methacrylate, acrylamide, methacrylamide, acrylonitrile, methacrylonitrile, and vinyl compounds such as styrene, vinyl acetate or vinyl chloride. A hydroxy-functional acrylic polymer can contain a polyester segment, for example a graft copolymer of acrylic monomer(s) onto an unsaturated polyester. The acrylic monomers are preferably selected from those above and include a hydroxy-containing monomer such as hydroxy-ethyl acrylate or methacrylate. The polyester segment is preferably a low molecular weight (below 1,000) polyester derived from a polyol such as ethylene glycol, propylene glycol or trimethylolpropane and an acid or anhydride such as phthalic anhydride, isophthalic acid or adipic acid with an unsaturated acid or anhydride such as maleic anhydride. The polyester can for example form 5 to 50% by weight, preferably 5 to 25% by weight, of the graft copolymer.

Hydroxy-functional polyesters suitable for use as the hydroxy component (A) can be prepared by the reaction of one or more diols, triols or higher polyols with a polycarboxylic acid, generally a dicarboxylic acid, or an anhydride thereof. Examples of suitable polyols are ethylene glycol , propylene glycol, 1,3-propane diol, 1,2-butane diol, 1,4-butane diol, 2,2,4-trimethyl-1,3-pentane diol, 1,6-hexane diol, neopentyl glycol, 1,4-cyclohexanediol, 1,4-cyclohexanedimethanol, diethylene glycol, dipropylene glycol, trimethylol propane, trimethylol ethane, glycerol and pentaerythritol. Examples of suitable polycarboxylic acids and anhydrides include phthalic anhydride, isophthalic acid, adipic acid, azelaic acid, sebacic acid, maleic anhydride or acid and fumaric acid. A lactone such as caprolactone or a hydroxy-acid such as hydroxy-caproic acid or dimethylol propionic acid can be included in the polyester-forming reaction. The hydroxy-functional polyester can be an alkyd polyol containing fatty acid moieties. Another suitable hydroxy-functional polyester can be prepared by reacting an epoxide such as ethylene oxide or a glycidyl ether or ester with a dicarboxylic acid.

Alternative hydroxy-functional polymers suitable for use as the hydroxy component (A) include polyether polyols, amide-containing polyols prepared by the reaction of a polycarboxylic acid or anhydride with a polyol and a diamine or amino alcohol, epoxy polyols prepared by the reaction of glycidyl ethers of polyphenols such as the diglycidyl ether of bisphenol A with a bisphenol or an aliphatic diol, polyvinyl alcohol, an allyl alcohol polymer such as a styrene/allyl alcohol copolymer optionally containing allyl ether units, cellulose or a cellulose derivative, or a hydroxy-functional polyurethane.

The hydroxy component (A) can alternatively be a non-polymeric polyol or can include a non-polymeric polyol such as ethylene glycol, 1,4-butane diol, neopentyl glycol, 1,4-cyclohexanedimethanol, 2,2-dimethyl-3-hydroxypropyl 2,2-dimethyl-3-hydroxypropionate, diethylene glycol or an alkoxylated bisphenol A.

The anhydride component (B) is preferably an anhydride-functional addition polymer of an unsaturated cyclic anhydride, for example maleic, itaconic or citraconic anhydride. The anhydride-functional polymer is usually a copolymer with one or more ethylenically unsaturated comonomers. Preferred copolymers contain 10 to 50% by weight maleic or itaconic anhydride units. The anhydride-functional polymer preferably contains a vinyl comonomer such as styrene (which is most preferred) or a substituted styrene, vinyl chloride or vinyl acetate at a molar ratio of at least 1:1 to the anhydride monomer, as described in US Patent 4798745. The anhydride-functional polymer preferably also contains units of one or more esters of acrylic or methacrylic acid, for example the acrylate and methacrylate esters described above as suitable for use in a hydroxy-functional acrylic polymer. The molecular weight of the anhydride-functional polymer is preferably in the range 1,000 to 50,000.

The anhydride component (B) can alternatively be an anhydride adduct of a diene polymer such as maleinised polybutadiene or a maleinised copolymer of butadiene, for example a butadiene/styrene copolymer. An anhydride adduct of an unsaturated fatty acid ester, for example a styrene/allyl alcohol copolymer esterified with an unsaturated fatty acid and maleinised, can also be used. Terpene/maleic anhydride copolymer resins are a further alternative.

Alternative anhydride-containing polymers can be formed from hydroxy-containing polymers, for example copolymers of hydroxyethyl acrylate or hydroxyethyl methaorylate or styrene/allyl alcohol copolymers, by reaction with a tricarboxylic compound capable of introducing anhydride groups, for example as described in European Patent Application 259172. A further alternative type of polymer containing anhydride groups is an adduct of trimellitic anhydride and a polyol, for example as described in European Patent Application 134691. The polymer containing anhydride groups can alternatively be formed by the reaction of a polymer containing thiol groups with an olefinically unsaturated cyclic carboxylic acid anhydride such as maleic anhydride or itaconic anhydride. The polymer containing thiol groups is preferably thiol-tipped. It can for example be a multi-limbed telechelic polymer formed by reaction of a corresponding hydroxy-tipped polymer with mercaptoacetic acid.

The amine groups present as catalyst are preferably tertiary amine groups since these are most effective in catalysing the reaction-between the hydroxy and anhydride groups without taking part in any undesirable side reactions. The amine catalyst may be present in the molecule of the hydroxy component (A) or in the molecule of the anhydride component (B) or as a separate compound. Preferably, the amine catalyst is a separate compound and is suitably mixed with either the hydroxy component (A) or the anhydride component (B) before these two components are mixed with one another. Particularly preferred amine catalysts are those containing at least one oleophilic group, for example a group containing a carbon chain of at least 8 carbon atoms. Examples of such preferred amine catalysts are N,N-di-methylalkylamines in which the alkyl group is derived from a natural oil or fat, for example N,N-dimethylcocoamine, N,N-dimethyltallowamine or N,N-dimethylhydrogenatedtallowamine, or N,N-dimethyllaurylamine. Lower molecular weight amines such as triethylamine can be used or the amine can be a phenolic compound containing one or more dialkylamino groups.

The amine catalyst can alternatively be a hydroxy-functional amine, preferably a tertiary amine, such as triethanolamine, N,N-dimethylaminoethanol, 2-hydroxymethyl-2-dimethylamino-1,3-propanediol or 2-hydroxymethyl-2-dimethylamino-1-propanol. Such a hydroxy-functional amine catalyst acts as part of the hydroxy component (A) in that the hydroxy groups react with the anhydride groups of component (B), although the hydroxy-functional amine catalyst is preferably not the only hydroxy-functional material present in the coating composition.

The amine groups can alternatively be incorporated in the molecule of the hydroxy component (A). The hydroxy component can for example be an acrylic polyol containing units of a hydroxyalkyl acrylate or methacrylate and units of a dialkylaminoalkyl acrylate or methacrylate such as dimethylaminoethyl acrylate, diethylaminoethyl acrylate, dimethylaminoethyl methacrylate or diethylaminoethyl methacrylate, or of a dialkylaminoalkyl-substituted amide such as dimethylaminopropyl methacrylamide. Units of a secondary amine containing a tertiary alkyl group such as t-butylaminoethyl methacrylate can alternatively be used. The acrylic polyol can for example contain 5 to 15% by weight of diethylaminoethyl methacrylate units. Alternatively, tertiary amine groups and hydroxy groups can be introduced into an acrylic resin by polymerising glycidyl acrylate or methacrylate, preferably with one or more ethylenically unsaturated comonomers, and subsequently reacting the glycidyl groups with a secondary amine. The comonomers preferably include a hydroxyalkyl acrylate or methacrylate.

The amine and hydroxy groups can be incorporated as hydroxyalkylamino groups, for example beta-hydroxy amino groups, hydroxyalkoxyalkylamino groups, hydroxy-substituted acyloxyalkylamino groups or hydroxy-substituted polyacyloxyalkylamino groups. Such groups are preferably present as terminal groups at the end of a flexible polymer chain, for example a polyether, polyester, silicone, diene polymer, hydrogenated diene polymer, polyurethane, polyisobutylene or polyacrylate chain, as described in European Patent Application 259172. Beta-hydroxy amino groups can be formed by the reaction of primary or secondary amine groups with an epoxide, as described in European Patent Application 259172. Hydroxyalkoxyalkylamino groups can be formed by further reaction with an epoxide. Hydroxy-substituted acyloxyalkylamino groups and hydroxy-substituted polyacyloxyalkylamino groups can be formed by reaction with a lactone such as epsilon-caprolactone.

The hydroxy component (A) for use in a coating composition of the invention may be a mixture of a polymer or compound containing hydroxy but not amine groups with a polymer or compound containing hydroxy and amine groups.

The amine groups can alternatively be incorporated in the anhydride component (B) as described in European Patent Application 353899. The anhydride component (B) can for example be a polymer containing cyclic carboxylic anhydride groups and N-(aminoalkyl)-substituted imide groups formed by the reaction of a polymer containing anhydride groups with a less than stoichiometric amount of a polyamine containing a primary amine group and at least one tertiary amine group. Such an anhydride polymer containing amine groups can be used as the whole of the anhydride component (B) or can be used in conjunction with a polymer containing cyclic carboxylic anhydride groups but no amine groups.

The catalytic amine groups can be amidine groups, for example cyclic amidine groups such as imidazoline or imidazole groups, as described in International Patent Application PCT/GB 90/01075. The amidine groups can be present as a separate compound such as imidazole or imidazoline or can be present in the molecule of the hydroxy component (A). Component (A) can for example contain at least two hydroxy-substituted imidazoline groupings or can be a copolymer containing N-vinyl imidazole monomer units.

The acid which is used to increase pot life is preferably an organic acid, more preferably a monovalent organic acid, especially a monocarboxylic acid. Preferably, it has a molecular weight less than 300, most preferably less than 150. Examples of preferred acids are acetic, propionic, n-butyric, isobutyric, n-valeric, isovaleric, formic, benzoic, chloroacetic, bromoacetic, dichloroacetic, trichloroacetic and nitroacetic acids. Alternatively, a sulphonic acid or phosphonic acid can be used, particularly in compositions in which the amine catalyst is a separate compound rather than being bound into the hydroxy component (A) or the anhydride component (B), but these stronger acids and inorganic acids are less preferred.

The acid and the amine catalyst react to form an amine salt in a reaction in which the equilibrium 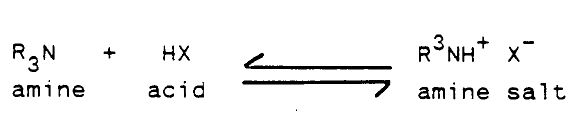
is set up. For weak acids such as carboxylic acids significant amounts of amine, acid and amine salt can all be present in the composition. The amount of amine available as a catalyst at any moment is dependent on the strength of the acid HX and its concentration. The amine catalyst is believed to function through a nucleophilic mechanism, so that protonation by the acid to form a triorgano-ammonium ion should remove its catalytic potential and hence its tendency to cause thickening and gelling of the coating composition in the pot. All or part of the amine catalyst and the acid can be added in the form of an amine salt if desired; the same equilibrium will be set up. We prefer to add the amine catalyst and acid separately, especially for weak acids such as acetic acid and other unsubstituted monocarboxylic acids which generally have a pKa in the range 3.7 to 5.1. For stronger acids it may be preferred to ado an amine salt of the acid in addition to the amine catalyst. When the coating composition is applied as a film the equilibrium of the reaction set out above appears to be changed, possibly by evaporation of the acid from the film or by other processes. Any retardation of curing of the film by the acid is much less than the retardation of thickening and gelling of the composition in the pot.

The acid is generally used at a molar ratio of acid groups to catalytically effective amine groups (C) of 0.1:1 to 10:1. For the preferred monocarboxylic acids such as acetic acid, the molar ratio of acid groups to amine groups is preferably 1:1 to 10:1, most preferably 2:1 to 6:1. Such monocarboxylic acids, especially the lower acids such as acetic and propionic acids, are particularly preferred for increasing the pot life of the coating composition without substantially slowing the cure time when applied as a film. Stronger acids such as substituted carboxylic acids having a pKa below about 3.5 such as down to about 2, for example chloroacetic or bromoacetic acid, are generally used at a molar ratio of 0.1:1 to 1:1 to the amine groups. Still stronger acids (pKa below about 2) such as sulphonic or phosphonic acids are used at a molar ratio to the amine groups of 0.5:1 or less. These stronger acids generally have some effect on slowing the cure time as well as increasing the pot life.

Where an amine salt is added as such to increase pot life, it is preferably an amine salt of a strong acid, for example of pKa below 3. Examples of such strong acids are mineral acids such as hydrochloric, sulphuric or phosphoric acid, sulphonic acids such as benzene sulphonic acid, p-toluene sulphonic acid or a long-chain alkyl aryl sulphonic acid, and corresponding phosphonic acids. Sulphate monoester amine salts or phosphate monoester amine salts can be used. It is preferred that either the acid or the amine moiety of the amine salt should contain a long alkyl chain, for example of at least 8 carbon atoms. The amine moiety of the salt is preferably a secondary or tertiary amine, for example a dialkylamine such as diisopropylamine or a trialkylamine such as triethylamine or N,N-dimethylcocoamine. The amine salt can for example be a diisopropylamine or triethylamine salt of a long chain alkyl aryl sulphonic acid or N,N-dimethylcocoamine phosphate. The amine salt is generally used at a molar ratio to the catalytically effective amine groups of from 0.1:1 to 10:1, preferably 0.1:1 to 1:1 if the amine salt is a salt of a strong acid.

If the coating composition is to be cured by heating it may be advantageous to use an acid whose acid group is unstable to heat when in amine salt form, for example a carboxylic acid whose amine salts are decarboxylated at a temperature lower than that used for curing the coating. In this case the acid can be a strong acid, that is it can have a low pKa, since the acid group is destroyed before curing takes place and cannot retard curing. It is preferably an organic monovalent acid, but could be polyvalent. Examples of suitable carboxylic acids for heat-cured compositions are trichloroacetic acid, whose amine salts are decarboxylated at temperatures of 80 to 120°C, and nitroacetic acid, whose amine salts are decarboxylated at below 80°C.

The acid or the amine salt is generally mixed with the component containing the catalytically effective amine groups before the hydroxy component (A) and the anhydride component (B) are mixed.

The amounts of hydroxy component (A) and anhydride component (B) in the coating composition of the invention are preferably such as to provide a ratio of equivalents of hydroxy groups to equivalents of anhydride groups in the range 1:3 to 3:1, most preferably 1:1.2 to 1.2:1.

The coating composition of the invention is preferably an organic-solvent-based composition. The solvent is chosen so that the hydroxy component (A), the anhydride component (B), the amine catalyst and the acid or the amine salt are soluble to the desired extent and are compatible with one another in solution. Organic solvents which can be used are for example aromatic hydrocarbons such as xylene, toluene or trimethyl benzene, ketones such as methyl isobutyl ketone or methyl isoamyl ketone and esters such as butyl acetate, ethoxyethyl acetate or methoxypropyl acetate, and mixtures thereof.

The coating composition can contain one or more additional ingredients, for example one or more pigments, which can be opaque or translucent pigments or metallic flake pigments, fillers, plasticisers, antioxidants, UV stabilisers, surfactants or flow control agents, including additives for imparting thixotropy or sag resistance or pigment orientation. In two-pack compositions where the hydroxy component (A), is a film-forming polymer such additional ingredients are preferably included in the hydroxy-functional polymer component of the paint.

The coating composition of the invention is generally a two-pack coating composition in which the hydroxy component (A) and the anhydride component (B) are stored separately and are mixed shortly before use. The coating can be applied to a substrate by spray, for example conventional airless spray, or by roller or brush or by dipping or flow coating. The coating is preferably an ambient-temperature-curing coating capable of curing on the substrate within 24 hours at ambient temperature, for example 10 - 40°C, to a hard film which is tack-free and resistant to solvent so that it can be overcoated. Maximum hardness, solvent resistance and impact resistance generally develop over a number of days at ambient temperature, for example 5 - 20 days. Curing can be carried out at temperatures above ambient, for example in the range 40 - 180°C, particularly 100 - 150°C, for shorter times if this is more convenient, for example when coating under factory conditions.

### Industrial Applicability

The coating compositions of the invention can be applied to a wide variety of substrates, particularly to rigid substrates such as metal, wood, glass or plastics. The compositions can be applied over most commercially sold primers. The coating compositions of the invention are widely useful as top coat paints and are particularly useful as automotive paints including paints for vehicle re-finishing. They can be applied in "clear on base" coating systems in which a pigmented coat is overcoated with a transparent clear coat. The coating compositions of the invention can be used as either the base coat or the clear coat in such coating systems or preferably as both. They can also be applied as clear coats over known base coats such as polyurethane, acrylic or polyester base coats.

The invention is illustrated by the following Examples.

### Example 1

250.2g styrene, 87.5g hydroxy-ethyl acrylate, 40g butyl acrylate, 247.7g methyl methacrylate, 61.2g xylene, and 7.8g tert-butyl perbenzoate were mixed together and run into a refluxing mixture of 137.3g methoxypropyl acetate, 197.6g xylene, and 6.2g cumene hydroperoxide (90% pure) over 5 hours. After addition was complete, a further 6.5g xylene was added, and the solution refluxed for 2 hours. A 62% solids by weight solution of a hydroxy-functional acrylic polymer having a hydroxy equivalent weight of 829 was produced, the solution having a hydroxy equivalent weight of 1337. This solution was used as resin (A) in Example 1.

Resin (B) was made by mixing 140g methoxypropyl acetate, 81.2g maleic anhydride, 92.8g styrene, 92.8g butyl acrylate, 92.8g methyl methacrylate, and 13g tert-butyl perbenzoate and adding this mixture to 270g of refluxing xylene over 5 hours. After that addition was complete 3 additions of 0.4g tert-butyl perbenzoate were made at 15-minute intervals. The mixture was held at reflux for a further 1 hour and then thinned to 40% solids by weight with butyl acetate, producing a resin with a solution anhydride equivalent weight of 1128 (polymer equivalent weight 451).

A two-pack paint was produced from resins (A) and (B). The first pack was made as follows:

| | |
|---|---|
| Resin (A) | 385g |
| Titanium dioxide | 195g |
| Butyl acetate | 79g |
| N,N dimethylcocoamine | 8.5g |
| Acetic acid | 8.7g |

The second pack consisted solely of 325g of resin (B). This gives a total composition with approximately 1:1 hydroxy:anhydride stoichiometry, 2.3% by weight on total resin solids of N,N-dimethylcocoamine, and acetic acid in an amount of 4 moles per mole of dimethylcocoamine.

### Examples 2 to 4

The process of Example 1 was repeated using a molar equivalent amount of propionic acid (Example 2), n-valeric acid (Example 3), or iso-valeric acid (Example 4) in place of acetic acid.

In a comparative experiment, Example 1 was repeated with the omission of the acetic acid.

In all cases the viscosity of the coating composition was measured on an ICI cone and plate viscometer immediately after mixing the two packs and again after 5 hours' storage in a sealed can at ambient temperature (about 25°C). The coating compositions were also applied to a steel panel to give a dry film build of 35 micrometers, and were allowed to cure at ambient temperature. The degree of curing of the films was measured by recording the number of double rubs of xylene-soaked rag across panels needed to penetrate the film.

**Table 1**

| Example number | Initial viscosity (Pa s) | Viscosity after 5 hrs (Pa s) | Solvent Resistance (xylene double rubs) | |
|---|---|---|---|---|
| | | | After 1 day | After 3 days |
| 1 | 0.38 | 1.12 | 20 | 110 |
| 2 | 0.38 | 1.32 | 20 | 110 |
| 3 | 0.42 | 1.30 | 13 | 80 |
| 4 | 0.40 | 1.17 | 13 | 65 |
| comparative experiment | 0.38 | 2.30 | 20 | 110 |

### Example 5

In another composition the resin (A) quoted in Examples 1 to 4 was used in conjunction with another anhydride-functional resin (B), made to the following procedure.

24g butyl acetate, 75g itaconic anhydride, 75g styrene, 75g butyl acrylate, 75g methyl methacrylate, and 24g tert-butyl peroctoate were mixed and added over 3 hrs to 169g of refluxing butyl acetate. On completion of this addition 50g of butyl acetate was added and reflux maintained for 1 hour. Three additions each of 0.37g of tert-butyl peroctoate were made with 30 minutes between additions. The resin was refluxed for a further 90 minutes before cooling and thinning to 33% solids by weight with butyl acetate. This gave a resin with an anhydride equivalent weight of 1446 on solution (477 on solid polymer).

Resins (A) and (B) were used to make an ambient-curing two-pack paint, the first pack having the following composition.

| | |
|---|---|
| Resin (A) | 499g |
| Titanium dioxide | 264g |
| Butyl acetate | 18g |
| N,N dimethylcocoamine | 20g |
| Witconate P10-59 | 4g |

The second pack consisted solely of 578g of resin (B).

Witconate P10-59 is a commercial proprietary product quoted as being an alkyl aryl sulfonate, isopropylamine salt. In a comparative experiment the same two-pack coating composition was prepared with the omission of the Witconate P10-59.

The performance of these two compositions was tested in a similar way to Examples 1 to 4. Pot life was determined by measuring viscosity by Ford 4 cup at 25°C immediately after mixing the two packs together, and after 5 hours, while cure rate was assessed by xylene solvent resistance. The results are shown in the following Table 2.

**Table 2**

| | Viscosity initial (seconds) | Viscosity after 5 hours (seconds) | Xylene Resistance (double rubs) after 1 day at ambient temperature |
|---|---|---|---|
| Example 5 | 60 | 148 | 100 |
| comparative experiment | 63 | 208 | 100 |

In addition, after 11 hours the sealed can containing the composition without the Witconate P10-59 was found to have completely gelled whilst the coating composition according to the invention, although too viscous for spray application, had not gelled and could still be applied by brush.

### Example 6

A hydroxy-functional polyester resin containing amino groups was prepared by the process described in Example 8 of European Patent Application 259172. An anhydride-functional polymer was prepared using the process of Example 1 of European Patent Application 259172. The hydroxy-functional polyester was mixed with acetic acid in an amount of 6 moles acetic acid for each amine group in the polyester and was then mixed with the anhydride polymer at a ratio of anhydride groups to hydroxy groups of 1:1 to form a coating composition.

In a comparative experiment the same coating composition was prepared with the omission of the acetic acid.

As measures of the pot life of the coating composition according to the invention the time taken for the initial viscosity of 0.1 Pa s to treble was 1.5 hours and the time taken to gel was 3.5 hours. The coating composition containing no acetic acid, which also had an initial viscosity of 0.1 Pa s, trebled in viscosity in 50 minutes and gelled in two hours. Both compositions cured to a hard tough film at ambient temperature when applied as a spray.

### Example 7

The process of Example 6 was repeated using bromoacetic acid in place of acetic acid. The amount of bromoacetic acid used was 1 mole per mole of amine in the hydroxy-functional polyester. On storage at ambient temperature the time taken to treble the initial viscosity was 4.5 hours and the gel time was 6 hours. When the coating composition was applied by spray it formed a cured film which was less hard than the coating of Example 6.

### Example 8

The process of Example 7 was repeated using an equivalent amount of trichloroacetic acid (pKa 0.70) in place of the bromoacetic acid. On storage at ambient temperature the coating composition showed very little increase in viscosity over 24 hours. The coating composition was applied by spray to a steel plate and cured at 150°C for 20 minutes to form a hard tough glossy film.

By comparison, when the trichloroacetic acid was replaced by an equivalent amount of methanesulphonic acid (pKa 0.69), whose amine salts are not heat-labile, the coating composition showed very little increase in viscosity but the coating film was substantially uncured after 20 minutes' heating at 150°C. When the amount of methanesulphonic acid was reduced to 0.1 mole per mole of amine, the pot life of the coating composition was still extended compared to a composition containing no acid, although the pot life was less than 24 hours. This coating could be cured after 20 minutes' heating at 150°C, although to a less hard film than that obtained when the trichloroacetic acid was used.

## Claims

1. A film-forming coating composition comprising (A) a hydroxy component having at least two free hydroxy groups per molecule, (B) an anhydride component having at least two carboxylic acid anhydride groups per molecule and (C) amine groups which are catalytically effective for accelerating the curing reaction between the hydroxy groups of (A) and the anhydride groups of (B), characterised in that the composition also contains an amine salt or an acid capable of forming an amine salt with the said catalytically effective amine groups.

2. A coating composition according to claim 1, characterised in that the acid capable of forming an amine salt is an organic acid.

3. A coating composition according to claim 1 or claim 2, characterised in that the amine groups are tertiary amine groups.

4. A coating composition according to any of claims 1 to 3, characterised in that the amine groups are present as an amine catalyst compound which is not part of the molecule of the hydroxy component (A) or the anhydride component (B).

5. A coating composition according to claim 4, characterised in that the amine catalyst compound contains at least one oleophilic group.

6. A coating composition according to any of claims 1 to 3, characterised in that the amine groups are present in the molecule of the hydroxy component (A).

7. A coating composition according to any of claims 2 to 6 in which the composition contains an organic acid capable of forming an amine salt with the said catalytically effective amine groups, characterised in that the organic acid is a monocarboxylic acid of molecular weight less than 300.

8. A coating composition according to claim 7, characterised in that the monocarboxylic acid has a pKa in the range 3.7 to 5.1 and is used at a molar ratio of acid groups to amine groups of 1:1 to 10:1.

9. A coating composition according to claim 8, characterised in that the monocarboxylic acid is used at a molar ratio of acid groups to amine groups of 2:1 to 6:1.

10. A coating composition according to any of claims 7 to 9, characterised in that the monocarboxylic acid is acetic acid.

11. A coating composition according to claim 7, which is a heat-curable coating composition, characterised in that the organic acid is a carboxylic acid whose amine salts undergo decarboxylation at a temperature lower than the intended curing temperature of the coating.

12. A coating composition according to claim 11, characterised in that the carboxylic acid is trichloroacetic acid.

13. A coating composition according to any of claims 1 to 6 which contains an amine salt, characterised in that the amine salt is a salt of an acid of pKa below 3.

14. A coating composition according to claim 13 which is a heat-curable coating composition, characterised in that the acid is a carboxylic acid whose amine salts undergo decarboxylation at a temperature lower than the intended curing temperature of the coating.

15. A coating composition according to claim 14, characterised in that the carboxylic acid is trichloroacetic acid.

16. A coating composition according to any of claims 13 to 15, characterised in that either the acid or the amine moiety of the amine salt contains an alkyl chain of at least 8 carbon atoms.

17. A coating composition according to any of claims 13 to 16, characterised in that the amine salt is used at a molar ratio to the catalytically effective amine groups of from 0.1:1 to 1:1.

18. A coating composition according to any of claims 1 to 17, characterised in that the hydroxy component (A) is a film-forming acrylic polymer or polyester.

19. A coating composition according to any of claims 1 to 18, characterised in that the anhydride component (B) is an addition polymer of an unsaturated cyclic anhydride.

20. A process for preparing a coating composition by mixing (A) a hydroxy component having at least two free hydroxy groups per molecule with (B) an anhydride component having at least two carboxylic acid anhydride groups per molecule, in which process the composition contains amine groups which are catalytically effective for accelerating the curing action between the hydroxy groups of (A) and the anhydride groups of (B), which amine groups are present in the molecule of the hydroxy component (A) or the anhydride component (B) or are present as a separate amine catalyst compound which is mixed with either the hydroxy component (A) or the anhydride component (B) before the hydroxy component (A) and the anhydride component (B) are mixed, characterised in that an amine salt or an acid capable of forming an amine salt with the said catalytically effective amine groups is mixed with the component containing the catalytically effective amine groups before the hydroxy component (A) and the anhydride component (B) are mixed.

21. A coating composition according to claim 1 and substantially as hereinbefore described or illustrated in any of the foregoing Examples.

22. A process for coating a substrate, characterised in that a coating composition according to any of claims 1 to 19 or 21 is applied to the substrate and cured.

## Patentansprüche

1. Filmbildende Beschichtungszusammensetzung bestehend aus (A) einer Hydroxykomponente mit mindestens zwei freien Hydroxylgruppen pro Molekül, (B) einer Anhydridkomponente mit mindestens zwei Carbonsäureanhydridgruppen pro Molekül sowie (C) Amingruppen, die bezüglich der Beschleunigung der Härtungsreaktion zwischen den Hydroxylgruppen (A) und den Anhydridgruppen von (B) katalytisch wirksam sind, dadurch gekennzeichnet, daß die Zusammensetzung ebenfalls ein Aminsalz oder eine zur Bildung eines Aminsalzes mit den katalytisch wirksamen Amingruppen befähigte Säure enthält.

2. Beschichtungszusammensetzung nach Anspruch 1, dadurch gekennzeichnet, daß die zur Bildung eines Aminsalzes befähigte Säure eine organische Säure ist.

3. Beschichtungszusammensetzung nach Anspruch 1 oder Anspruch 2, dadurch gekennzeichnet, daß es sich bei den Amingruppen um tertiäre Amingruppen handelt.

4. Beschichtungszusammensetzung nach einem der Ansprüche 1 bis 3, dadurch gekennzeichnet, daß die Amingruppen als Amin-Katalysatorverbindung vorliegen, die keinen Bestandteil des Moleküls der Hydroxykomponente (A) oder der Anhydridkomponente (B) darstellt.

5. Beschichtungszusammensetzung nach Anspruch 4, dadurch gekennzeichnet, daß die Amin-Katalysatorverbindung mindestens eine oleophile Gruppe aufweist.

6. Beschichtungszusammensetzung nach einem der Ansprüche 1 bis 3, dadurch gekennzeichnet, daß die Amingruppen im Molekül der Hydroxykomponente (A) enthalten sind.

7. Beschichtungszusammensetzung nach einem der Ansprüche 2 bis 6, bei der die Zusammensetzung eine zur Bildung eines Aminsalzes mit den katalytisch wirksamen Amingruppen befähigte Säure enthält, dadurch gekennzeichnet, daß die organische Säure eine Monocarbonsäure mit einem Molekulargewicht von weniger als 300 ist.

8. Beschichtungszusammensetzung nach Anspruch 7, dadurch gekennzeichnet, daß die Monocarbonsäure einen pKₛ-Wert im Bereich von 3,7 bis 5,1 besitzt und in einem Molverhältnis von Säuregruppen zu Amingruppen von 1:1 bis 10:1 eingesetzt wird.

9. Beschichtungszusammensetzung nach Anspruch 8, dadurch gekennzeichnet, daß die Monocarbonsäure in einem Molverhältnis von Säuregruppen zu Amingruppen von 2:1 bis 6:1 eingesetzt wird.

10. Beschichtungszusammensetzung nach einem der Ansprüche 7 bis 9, dadurch gekennzeichnet, daß die Monocarbonsäure Essigsäure ist.

11. Beschichtungszusammensetzung nach Anspruch 7, bei der es sich um eine heißhärtbare Beschichtungszusammensetzung handelt, dadurch gekennzeichnet, daß die organische Säure eine Carbonsäure ist, deren Aminsalze bei einer unterhalb der vorgesehenen Härtungstemperatur der Beschichtung liegenden Temperatur decarboxyliert werden.

12. Beschichtungszusammensetzung nach Anspruch 11, dadurch gekennzeichnet, daß die Carbonsäure Trichloressigsäure ist.

13. Aminsalzhaltige Beschichtungszusammensetzung nach einem der Ansprüche 1 bis 6, dadurch gekennzeichnet, daß das Aminsalz ein Salz einer Säure mit einem pKₛ-Wert unterhalb 3 ist.

14. Beschichtungszusammensetzung nach Anspruch 13, bei der es sich um eine heißhärtbare Beschichtungszusammensetzung handelt, dadurch gekennzeichnet, daß die Säure eine Carbonsäure ist, deren Aminsalze bei einer unterhalb der vorgesehenen Härtungstemperatur der Beschichtung liegenden Temperatur decarboxyliert werden.

15. Beschichtungszusammensetzung nach Anspruch 14, dadurch gekennzeichnet, daß die Carbonsäure Trichloressigsäure ist.

16. Beschichtungszusammensetzung nach einem der Ansprüche 13 bis 15, dadurch gekennzeichnet, daß entweder die Säure oder der Aminteil des Aminsalzes eine Alkylkette mit mindestens 8 Kohlenstoffatomen aufweist.

17. Beschichtungszusammensetzung nach einem der Ansprüche 13 bis 16, dadurch gekennzeichnet, daß das Aminsalz in einem Molverhältnis bezüglich der katalytisch wirksamen Amingruppen von 0,1:1 bis 1:1 eingesetzt wird.

18. Beschichtungszusammensetzung nach einem der Ansprüche 1 bis 17, dadurch gekennzeichnet, daß die Hydroxykomponente (A) ein filmbildendes Acrylpolymer oder einen filmbildenden Polyester darstellt.

19. Beschichtungszusammensetzung nach einem der Ansprüche 1 bis 18, dadurch gekennzeichnet, daß die Anhydridkomponente (B) ein Polymerisat eines ungesättigten cyclischen Anhydrids darstellt.

20. Verfahren zur Herstellung einer Beschichtungszusammensetzung durch Vermischen von (A) einer Hydroxykomponente mit mindestens zwei freien Hydroxylgruppen pro Molekül mit (B) einer Anhydridkomponente mit mindestens zwei Carbonsäureanhydridgruppen pro Molekül, worin die Zusammensetzung Amingruppen enthält, die bezüglich der Beschleunigung der Härtungsreaktion zwischen den Hydroxylgruppen von (A) und den Anhydridgruppen von (B) katalytisch wirksam sind, wobei die Amingruppen im Molekül der Hydroxykomponente (A) oder der Anhydridkomponente (B) enthalten sind oder als getrennte Amin-Katalysatorverbindung vorliegen, die entweder mit der Hydroxykomponente (A) oder der Anhydridkomponente (B) vor dem Vermischen der Hydroxykomponente (A) mit der Anhydridkomponente (B) vermischt werden, dadurch gekennzeichnet, daß ein Aminsalz oder eine zur Bildung eines Aminsalzes mit den katalytisch wirksamen Amingruppen befähigte Säure mit der die katalytisch wirksamen Amingruppen enthaltenden Komponente vor dem Vermischen der Hydroxykomponente (A) mit der Anhydridkomponente (B) vermischt werden.

21. Beschichtungszusammensetzung nach Anspruch 1 und im wesentlichen wie oben beschrieben oder in einem der vorhergehenden Beispiele veranschaulicht.

22. Verfahren zur Beschichtung eines Substrats, dadurch gekennzeichnet, daß eine Beschichtungszusammensetzung nach einem der Ansprüche 1 bis 19 oder 21 auf das Substrat aufgetragen und gehärtet wird.

## Revendications

1. Composition de revêtement filmogène, comprenant (A) un composant hydroxylé comportant au moins deux groupes hydroxy libres par molécule, (B) un composant anhydride comportant au moins deux groupes anhydride d'acide carboxylique par molécule et (C) des groupes amine ayant une activité catalytique pour accélérer la réaction de réticulation entre les groupes hydroxy de (A) et les groupes anhydride de (B), caractérisée en ce que la composition contient aussi un sel d'amine ou un acide capable de former un sel d'amine avec lesdits groupes amine à activité catalytique.

2. Composition de revêtement selon la revendication 1, caractérisée en ce que l'acide capable de former un sel d'amine est un acide organique.

3. Composition de revêtement selon la revendication 1 ou 2, caractérisée en ce que les groupes amine sont des groupes amine tertiaires.

4. Composition de revêtement selon l'une quelconque des revendications 1 à 3, caractérisée en ce que les groupes amine sont présents sous forme d'un composé catalytique de type amine qui ne fait pas partie de la molécule du composant hydroxylé (A) ou du composant anhydride (B).

5. Composition de revêtement selon la revendication 4, caractérisée en ce que le composé catalytique amine contient au moins un groupe oléophile.

6. Composition de revêtement selon l'une quelconque des revendications 1 à 3, caractérisée en ce que les groupes amine sont présents dans la molécule du composant hydroxylé (A).

7. Composition de revêtement selon l'une quelconque des revendications 2 à 6, dans laquelle la composition contient un acide organique capable de former un sel d'amine avec lesdits groupes amine à activité catalytique, caractérisée en ce que l'acide organique est un acide monocarboxylique de masse moléculaire inférieure à 300.

8. Composition de revêtement selon la revendication 7, caractérisée en ce que l'acide monocarboxylique possède un pKa dans la gamme de 3,7 à 5,1 et est utilisé dans un rapport molaire des groupes acide aux groupes amine de 1:1 à 10:1.

9. Composition de revêtement selon la revendication 8, caractérisée en ce que l'acide monocarboxylique est utilisé dans un rapport molaire des groupes acide aux groupes amine de 2:1 à 6:1.

10. Composition de revêtement selon l'une quelconque des revendications 7 à 9, caractérisée en ce que l'acide monocarboxylique est l'acide acétique.

11. Composition de revêtement selon la revendication 7, qui est une composition de revêtement thermodurcissable, caractérisée en ce que l'acide organique est un acide carboxylique dont les sels d'amine subissent une décarboxylation à une température inférieure à la température de durcissement prévue pour le revêtement.

12. Composition de revêtement selon la revendication 11, caractérisée en ce que l'acide carboxylique est l'acide trichloroacétique.

13. Composition de revêtement selon l'une quelconque des revendications 1 à 6, qui contient un sel d'amine, caractérisée en ce que le sel d'amine est un sel d'un acide dont le pKa est inférieur à 3.

14. Composition de revêtement selon la revendication 13, qui est une composition de revêtement thermodurcissable, caractérisée en ce que l'acide est un acide carboxylique dont les sels d'amine subissent une décarboxylation à une température inférieure à la température de durcissement prévue pour le revêtement.

15. Composition de revêtement selon la revendication 14, caractérisée en ce que l'acide carboxylique est l'acide trichloroacétique.

16. Composition de revêtement selon l'une quelconque des revendications 13 à 15, caractérisée en ce que le groupement acide ou le groupement amine du sel d'amine contient une chaîne alkyle d'au moins 8 atomes de carbone.

17. Composition de revêtement selon l'unes quelconque des revendications 13 à 16, caractérisée en ce que le sel d'amine est utilisé dans un rapport molaire, par rapport aux groupes amine à activité catalytique, de 0,1:1 à 1:1.

18. Composition de revêtement selon l'une quelconque des revendications 1 à 17, caractérisée en ce que le composant hydroxylé (A) est un polymère acrylique filmogène ou un polyester filmogène.

19. Composition de revêtement selon l'une quelconque des revendications 1 à 18, caractérisée en ce que le composant anhydride (a) est un polymère d'addition d'un anhydride cyclique insaturé.

20. Procédé de préparation d'une composition de revêtement qui consiste à mélanger (A) un composant hydroxylé comportant au moins deux groupes hydroxy libres par molécule avec (B) un composant anhydride comportant au moins deux groupes anhydride d'acide carboxylique par molécule, procédé dans lequel la composition contient des groupes amine ayant une activité catalytique pour accélérer la réaction de réticulation entre les groupes hydroxy de (A) et les groupes anhydride de (B), ces groupes amine étant présents dans la molécule du composant hydroxylé (A) ou dans la molécule du composant anhydride (B) ou étant présents sous forme de composé catalytique amine séparé, mélangé ou bien avec le composant hydroxylé (A), ou bien avec le composant anhydride (B), avant que le composant hydroxylé (A) et le composant anhydride (B) soient mélangés, caractérisé en ce que l'on mélange un sel d'amine, ou un acide capable de former un sel d'amine avec lesdits groupes amine à activité catalytique, avec le composant contenant les groupes amine à activité catalytique, avant de mélanger le composant hydroxylé (A) et le composant anhydride (B).

21. Composition de revêtement selon la revendication 1 et essentiellement telle que décrite ci-dessus ou illustrée dans l'un quelconque des exemples précédents.

22. Procédé de revêtement d'un substrat, caractérisé en ce qu'une composition de revêtement selon l'une quelconque des revendications 1 à 19 ou 21 est appliquée sur le substrat et durcie.
